# EUROPEAN PATENT APPLICATION

(11) **EP 3 566 594 A1**
(43) Date of publication of application: **13.11.2019**
(21) Application number: 18736052.4
(22) Date of filing: 05.01.2018
(51) Int. Cl.: A24F 47/00

(54) **ELECTRONIC CIGARETTE AND METHOD FOR CONTROLLING E-LIQUID THEREOF**

(30) Priority: 09.01.2017 CN 201710013319
(71) Applicant: Changzhou Patent Electronic Technology Co., Ltd, Jiangsu 213001 (CN)
(72) Inventor: QIU, Weihua, Jiangsu 213164 (CN)
(74) Representative: Zaboliene, Reda
(86) International application number: PCT/CN2018/071543
(87) International publication number: WO 2018/127121

(57) **Abstract**

Disclosed is an E-cigarette, comprising a housing, and an atomization liquid storing chamber, a cigarette liquid storing chamber, an electric pump and a controlling board which are inside the housing, the atomization liquid storing chamber and the cigarette liquid storing chamber are configured to store cigarette liquid, the electric pump is electrically coupled with the controlling board, wherein the E-cigarette further comprises a collecting chamber configured to collect cigarette liquid, and the electric pump is configured to adjust a liquid level of the cigarette liquid storing chamber for cigarette liquid, a liquid level of the atomization liquid storing chamber for cigarette liquid or a liquid level of the collecting chamber for cigarette liquid, according to a signal from the controlling board. Also disclosed is a method for controlling cigarette liquid in an E-cigarette, enabling detection of cigarette liquid moving into and out of a collecting chamber, as well as liquid level of the collecting chamber for cigarette liquid, so as to control an electric pump to pump the cigarette liquid in the collecting chamber into the cigarette liquid storing chamber or out of the E-cigarette, when the liquid level of the cigarette liquid in the collecting chamber reaches a certain level. The disclosure can realize control over the cigarette liquid for the E-cigarette and prevent the cigarette liquid from leaking out of the E-cigarette.

## Description

### FIELD

The present disclosure relates to the field of smoking-simulating technology, and particularly to an E-cigarette and a method for controlling cigarette liquid therein.

### BACKGROUND

E-cigarette, also known as electronic cigarettes, provides smokers with a substitute for smoking. E-cigarette is a smoking device without open fire that usually includes a battery-powered atomizing device to atomize liquid nicotine or nicotine substitutes when activated by a user. Usually, when a user simulates a smoking action by inhaling on the E-cigarette, a controller will automatically activate the atomizing device.

However, the E-cigarette atomizing device is prone to leakage in use, which is primarily caused by the condensation and prolonged penetration of cigarette liquid. When the cigarette liquid of the E-cigarette is atomized, an aerogel will be generated. When such aerogel at a higher temperature passes through a smoke channel at a lower temperature, the aerogel will, due to heat transfer based on the convective heat-exchange principle, rapidly cool off and condense into cigarette liquid on the inner wall of the smoke passage before flowing out of the smoke passage. The condensed cigarette liquid will adhere onto the inner wall of the atomizing chamber. After long-term use, cigarette liquid droplets accumulate too many, which leads to liquid leakage. In addition, when the E-cigarette is not in use, the cigarette liquid may leak along the aspiration element due to the infiltration of cigarette liquid, keep at the bottom of the atomizing head due to gravity, or spill out of the gas inlet, and then liquid leakage is caused.

### SUMMARY

The present disclosure aims at drawbacks in the prior art. A technical problem that is solved by the present disclosure lies in that an E-cigarette is provided, which can effectively prevent the cigarette liquid in the E-cigarette from leaking out therefrom.

Another technical problem that is solved by the present disclosure lies in that a method for controlling cigarette liquid in an E-cigarette is provided, which can realize the control on cigarette liquid flowing in and out and the control on cigarette liquid storage for the E-cigarette, while effectively prevents the cigarette liquid in the E-cigarette from leaking out therefrom.

In order to solve the above technical problems, a technical solution adopted by the present disclosure lies in providing an E-cigarette including a housing, an atomization liquid storing chamber inside the housing and a controlling board, the atomization liquid storing chamber is configured to store cigarette liquid, where:
the E-cigarette further comprises a collecting chamber configured to collect leaked cigarette liquid in the E-cigarette, and a cleaning apparatus, wherein the cleaning apparatus is configured to clean the cigarette liquid in the collecting chamber.

Optionally, the cleaning apparatus including an electric pump electrically coupled to the controlling board, and the electric pump is controlled by the controlling board to clean the cigarette liquid in the collecting chamber.

Optionally, the collecting chamber is provided with a second through hole, the atomization liquid storing chamber is provided with a third through hole, and the electric pump is configured to be in communication with the collecting chamber through the second through hole, and to be in communication with the atomization liquid storing chamber through the third through hole.

Optionally, a bottom of the housing is provided with a first through hole, the collecting chamber is provided with a second through hole, and the electric pump is configured to be in communication with the collecting chamber through the second through hole, and to be in communication with the external of the E-cigarette through the first through hole.

Optionally, the collecting chamber is internally provided with a second liquid level detecting component which is electrically coupled with the controlling board and configured to detect a liquid level in the collecting chamber.

Optionally, the atomization liquid storing chamber is internally provided with a first liquid level detecting component which is electrically coupled with the controlling board, the first liquid level detecting component is arranged on any one of or any combination of: a bottom of the atomization liquid storing chamber, a upper portion of the sidewall of the atomization liquid storing chamber and a lower portion of the sidewall of the atomization liquid storing chamber, the first liquid level detection component being configured to: detect a minimum liquid level of the atomization liquid storing chamber if arranged on the bottom thereof, detect a maximum liquid level of the atomization liquid storing chamber if arranged on the upper portion of the sidewall thereof, and detect a first preset liquid level value for the atomization liquid storing chamber if arranged on the lower portion of the sidewall thereof, where the first preset liquid level value is 70% - 90% of the maximum liquid level of a liquid storing chamber in the atomization liquid storing chamber.

Optionally, the atomization liquid storing chamber is internally provided with a first pneumatic pressure controlling component which is electrically coupled to the controlling board, the first pneumatic pressure controlling component includes a first pressure relieving valve and a first pneumatic pressure detecting component configured to detect a pneumatic pressure in the atomization liquid storing chamber, and the first pressure relieving valve is configured to relieve pressure for the atomization liquid storing chamber when the pneumatic pressure in the atomization liquid storing chamber reaches a first preset pressure value.

Optionally, the E-cigarette further includes a cigarette liquid storing chamber, and the cigarette liquid storing chamber is internally provided with a third liquid level detecting component which is electrically coupled with the controlling board, the third liquid level detecting component includes a liquid level detecting component configured to detect a minimum liquid level of the cigarette liquid storing chamber; and/or configured to detect a maximum liquid level of the cigarette liquid storing chamber; and
the cigarette liquid storing chamber is further provided internally with a second pneumatic pressure controlling component which is electrically coupled with the controlling board and the second pneumatic pressure controlling component includes a second pneumatic pressure detecting component configured to detect a pneumatic pressure for the cigarette liquid storing chamber and a second pressure relieving valve configured to relieve pressure for the cigarette liquid storing chamber when the pneumatic pressure in the cigarette liquid storing chamber reaches a second preset pressure value.

Optionally, the E-cigarette further includes a cigarette liquid storing chamber, and the collecting chamber is located on the bottom of the housing, the atomization liquid storing chamber and the cigarette liquid storing chamber are located above the collecting chamber, the atomization liquid storing chamber is located inside the cigarette liquid storing chamber, or the atomization liquid storing chamber is located in parallel with the cigarette liquid storing chamber; and the collecting chamber or the cigarette liquid storing chamber is detachably disposed with respect to the E-cigarette.

Optionally, the E-cigarette further includes: a cigarette mouthpiece, and a smoke passage arranged in the atomization liquid storing chamber, where the cigarette mouthpiece is mounted on the smoke passage and extends out of the housing from the smoke passage, the smoke passage is provided an atomizing head with a liquid inlet through which the cigarette liquid in the atomization liquid storing chamber flows into the atomizing head via the liquid inlet.

In order to solve the above technical problems, another technical solution adopted by the present disclosure lies in providing a method for controlling cigarette liquid in an E-cigarette, which includes the following steps:
detecting whether a cleaning condition for cleaning cigarette liquid in a collecting chamber is satisfied, wherein the collecting chamber is configured to collect leaked cigarette liquid in the E-cigarette; and
when the cleaning condition is satisfied, cleaning the cigarette liquid in the collecting chamber.

Optionally, the detecting whether a cleaning condition for cleaning cigarette liquid in the collecting chamber is satisfied, includes:
obtaining a liquid level in the collecting chamber; and
detecting whether the liquid level reaches a preset threshold.

Optionally, the detecting whether a cleaning condition for cleaning cigarette liquid in a collecting chamber is satisfied, includes:
obtaining a time difference from the last cleaning of the collection chamber; and
detecting whether the time difference from the last cleaning of the collection chamber reaches a preset time difference.

Optionally, the when the cleaning condition is satisfied, cleaning the cigarette liquid in the collecting chamber, includes:
when the time difference from the last cleaning of the collection chamber reaches a preset time difference, cleaning the cigarette liquid in the collection chamber at a preset moment thereafter, where the preset moment is a moment of an end of an suction or a moment of a next startup.

Optionally, the cleaning the cigarette liquid in the collecting chamber, includes:
pumping the cigarette liquid in the collecting chamber into an atomization liquid storing chamber;
or,
pumping the cigarette liquid in the collecting chamber out of the E-cigarette;
or,
sending prompting information, wherein the prompting information is configured to prompt a change of the collecting chamber.

Optionally, the method further includes:
pumping cigarette liquid in the cigarette liquid storing chamber into the atomization liquid storing chamber;
detecting a liquid level in the atomization liquid storing chamber;
determining whether the detected liquid level reaches a first preset liquid level value; and
when the detected liquid level reaches the first preset liquid level value, terminating the pumping of the cigarette liquid in the cigarette liquid storing chamber into the atomization liquid storing chamber.

Optionally, the method further includes:
detecting whether the liquid level in the atomization liquid storing chamber is lower than a minimum liquid level, and
when the detecting result indicates that the atomization liquid storing chamber is lower than a minimum liquid level, controlling an electric pump to pump the cigarette liquid in the cigarette liquid storing chamber into the atomization liquid storing chamber; otherwise when the detecting result indicates that the atomization liquid storing chamber is not lower than the minimum liquid level, sending, by an controlling board, prompting information to a display to prompt a user to clean the atomization liquid storing chamber; or
when the prompting information is ignored, then instead of cleaning the cigarette liquid from the atomization liquid storing chamber, controlling, by the controlling board, the electric pump to pump the cigarette liquid in the cigarette liquid storing chamber into the atomization liquid storing chamber; otherwise when the prompting information is not ignored, deactivating, by the controlling board, the E-cigarette, and pumping the cigarette liquid in the atomization liquid storing chamber into the cigarette liquid storing chamber;
detecting a liquid level in the cigarette liquid storing chamber;
when the liquid level in the cigarette liquid storing chamber is determined to be lower than a minimum liquid level, controlling, by the controlling board, the electric pump to pump cigarette liquid into the cigarette liquid storing chamber; or
when the liquid level in the cigarette liquid storing chamber is determined to be at the maximum liquid level, controlling, by the controlling board, the electric pump to stop pumping cigarette liquid into the cigarette liquid storing chamber.

Optionally, the method further includes:
detecting pneumatic pressure in the cigarette liquid storing chamber and determining whether the detected pneumatic pressure reaches a second preset pressure value; and
relieving pressure for the cigarette liquid storing chamber when the detected pneumatic pressure reaches the second preset pressure value.

Optionally, the method further includes:
detecting pneumatic pressure in the atomization liquid storing chamber and determining whether the detected pneumatic pressure reaches a first preset pressure value; and
relieving pressure for the atomization liquid storing chamber when the detected pneumatic pressure reaches the first preset pressure value; and
continuing the detecting of the pneumatic pressure in the atomization liquid storing chamber and the determining of whether the liquid level in the atomization liquid storing chamber reaches the first preset liquid level value, when the detected pneumatic pressure is yet to reach the first preset pressure value.

An E-cigarette according to the present disclosure is provided with a collecting chamber for collecting the condensate sliding down the wall of the atomizing passage and the cigarette liquid leaking from the aspiration element. Moreover, the method for controlling cigarette liquid provided by the present disclosure can exercise detection and control over the cigarette liquid moving into and out of, as well as the liquid level of, the collecting chamber, so that when the cigarette liquid in the collecting chamber reaches a given level, an electric pump will be controlled to pump the cigarette liquid in the collecting chamber into a cigarette liquid storing chamber or out of the E-cigarette, thereby effectively reducing the leakage of cigarette liquid, and extending the service life of the E-cigarette.

### BRIEF DESCRIPTION OF THE DRAWINGS

FIG. 1 is a schematic structural diagram of an E-cigarette according to an embodiment of the present disclosure;
FIG. 2 is a schematic flow chart of a method for controlling cigarette liquid in an E-cigarette according to an embodiment of the present disclosure;
FIG. 3 is a schematic flow chart of a method for controlling cigarette liquid in an E-cigarette according to another embodiment of the present disclosure;
FIG. 4 is a schematic flow chart of a method for controlling cigarette liquid in an E-cigarette according to yet another embodiment of the present disclosure;
FIG. 5 is a schematic structural diagram of a first pneumatic pressure controlling component as shown in FIG. 1 of the present disclosure;
FIG. 6 is a schematic structural diagram of a second pneumatic pressure controlling component as shown in FIG. 1 of the present disclosure;
FIG. 7 is a schematic structural diagram of a first embodiment of an exemplary electric pump as shown in FIG. 1 of the present disclosure;
FIG. 8 is a schematic structural diagram of a second embodiment of an exemplary electric pump as shown in FIG. 1 of the present disclosure;
FIG. 9 is a schematic structural diagram of a third embodiment of an exemplary electric pump as shown in FIG. 1 of the present disclosure; and
FIG. 10 is a schematic structural diagram of an exemplary cigarette liquid bottle according to an embodiment of the present disclosure.

The following specifical implementations will further explain the present disclosure in conjunction with the above drawings.

### DETAILED DESCRIPTION OF THE EMBODIMENTS

The disclosure will be described in detail hereunder in conjuncture with the embodiments shown the drawings. However, these embodiments are not intended to limit the present disclosure, and any alteration to the structure or function made by those skilled in the art according to these embodiments shall be included in the protection scope of the present disclosure.

Embodiments of the present disclosure provides an E-cigarette, which includes a housing, an atomization liquid storing chamber inside the housing, a cleaning apparatus, a controlling board and a collecting chamber, where the atomization liquid storing chamber is configured to store cigarette liquid, and the collecting chamber configured to collect leaked cigarette liquid in the E-cigarette.

The atomization liquid storing chamber refers to a chamber which is close to a heating element and is configured to store cigarette liquid. Optionally, a cigarette liquid storing chamber is further included in the E-cigarette, and the cigarette liquid storing chamber refers to a chamber for storing a certain quantity of cigarette liquid in the E-cigarette, where the cigarette liquid storing chamber may be configured to provide liquid to the atomization liquid storing chamber. With both the atomization liquid storing chamber and the cigarette liquid storing chamber arranged simultaneously, the capacity of the cigarette liquid that can be accommodated in the E-cigarette may be increased, which extends the use time after one injection. In the following embodiments, unless otherwise specified, the E-cigarette including both the atomization liquid storing chamber and the cigarette liquid storing chamber simultaneously is taken as examples.

The collecting chamber is arranged under the atomization liquid storing chamber, and an opening is arranged in a side of the collecting chamber close to the atomization liquid storing chamber, and is configured to accommodate cigarette liquid leaked from the atomization liquid storing chamber.

The cleaning apparatus is configured to clean the cigarette liquid in the collecting chamber. In practical implementation, the cleaning apparatus may be electric, such as an electric pump, or manual, such as a manual pump. In the following, two cases are separately described.

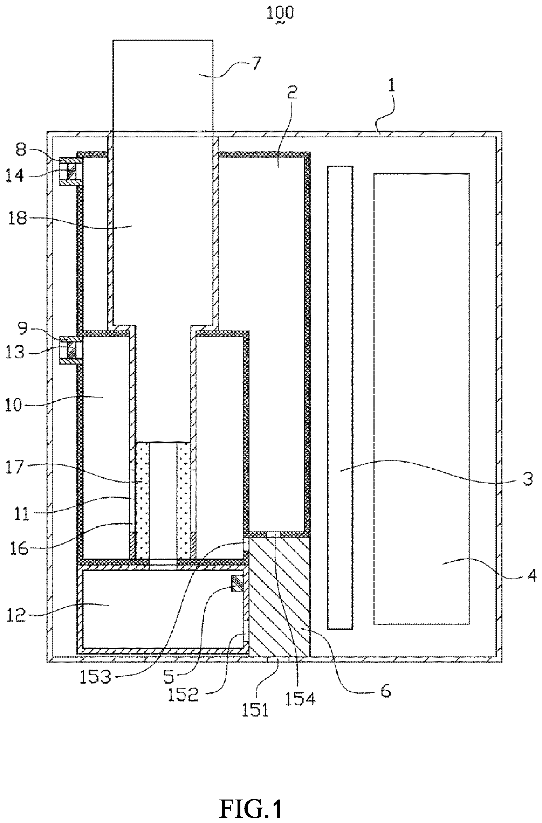

Referring to FIG. 1, a schematic structural diagram of an E-cigarette according to a preferred embodiment of the present disclosure is shown. The E-cigarette is configured to realize controlling over the cigarette liquid. The cleaning apparatus which is an electric pump is taken as an example in the present embodiment. The E-cigarette 100 includes a housing 1, and a cigarette liquid storing chamber 2, a controlling board 3, a power supply 4, an electric pump 6, an atomization liquid storing chamber 10, an atomizing head 11, and a collecting chamber 12, all of which locates inside the housing 1. The E-cigarette 100 further includes a cigarette mouthpiece 7 which extends out of the housing 1.

In this embodiment, a smoke passage 18 is provided in the atomization liquid storing chamber 10. The cigarette mouthpiece 7 is mounted on the smoke passage 18 and extends out of the housing 1 from the smoke passage 18. The atomizing head 11 is disposed on a bottom of the smoke passage 18, and next to the atomizing head 11, a liquid inlet 16 is arranged, which is in communication with the atomization liquid storing chamber 10 to allow cigarette liquid to flow to an aspiration element 17. The cigarette liquid flows via the liquid inlet 16 into the atomizing head 11, where the cigarette liquid is atomized into smoke which is discharged via the smoke passage 18 out of the cigarette mouthpiece 7 for a smoker to smoke. Further, the atomizing head 11 also includes an aspiration element 17 and a heating element (not shown) disposed therein. In an embodiment, the aspiration element 17 wraps the heating element. In another embodiment, the heating element wraps the aspiration element 17. Optionally, an end of the aspiration element 17 extends into the atomization liquid storing chamber 10 via the liquid inlet 16, so as to draw liquid more effectively. Optionally, the aspiration element 17 is a functional element for adsorbing liquid, such as cotton, fiber ropes and the like, and the heating element is a metal wire such as nichrome and the like. Optionally, FIG. 1 illustrates only the E-cigarette including the aspiration element 17. Optionally, in practical implementation, if the electric pump 6 can control the cigarette liquid storing chamber 2 and the atomization liquid storing chamber 10, the aspiration element 17 may not be included therein. Instead, the cigarette liquid in the cigarette liquid storing chamber 2 is directly pumped by the electric pump 6 to the atomization liquid storing chamber 10, which is not limited herein.

The present disclosure further includes a display (not shown), which is mounted on the outer surface of the housing 1, and may particularly be provided on a side surface, a top surface or a bottom surface thereof. The display is electrically coupled with the controlling board 3 to display data related to the E-cigarette 100 for viewing. The related data that may be shown on the display includes prompting information or E-cigarette parameter information for, e.g., prompting the user to clean the atomization liquid storing chamber 10, prompting the user to refill the atomization liquid storing chamber 10, prompting the user to refill the cigarette liquid storing chamber 2, informing the user that the cigarette liquid storing chamber 2 has been completing refilling, etc.. and the E-cigarette parameter information may include the power voltage, the real-time current, the power setting, the real-time resistance, and the like.

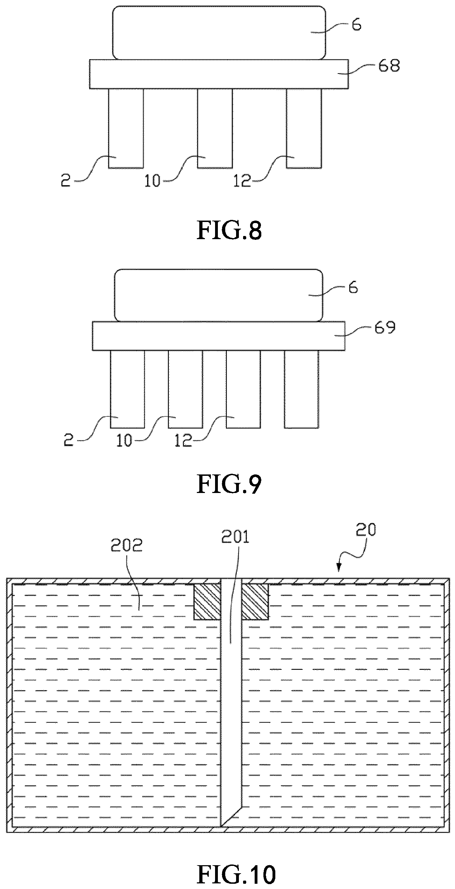

As shown in FIG. 10, the present disclosure further includes a cigarette liquid bottle 20, which is provided with a conduit 201 which is retractable into and out of the bottle. The cigarette liquid bottle 20 is filled with cigarette liquid that can be used by the E-cigarette 100.

As shown in FIG. 1, one of the functions common to the cigarette liquid storing chamber 2, the atomization liquid storing chamber 10 and the collecting chamber 12 is to store the cigarette liquid, and the atomization liquid storing chamber 10 and the collecting chamber 12 are coupled to the electric pump 6. The bottom of the housing 1 is provided with a first through hole 151, through which the collecting chamber 12, the atomization liquid storing chamber 10 and the cigarette liquid storing chamber 2 may communicate with a cigarette liquid bottle 20 external to the E-cigarette 100. The collecting chamber 12 is located on the bottom of the housing 1, a second through hole 152 is provided at a location where the collecting chamber 12 contacts the electric pump 6, and the electric pump 6 may pump the cigarette liquid in the collecting chamber through the second through hole 152 to other positions; when a third through hole 153 is provided at a location where the atomization liquid storing chamber 10 contacts the electric pump 6, the electric pump 6 may pump the cigarette liquid out from the collecting chamber through the second through hole 152, and then transmit the cigarette liquid pumped out to the atomization liquid storing chamber 10 through the third through hole 153. Optionally, when a fourth through hole 154 is provided at a location where the cigarette liquid storing chamber 2 contacts the electric pump 6, the electric pump 6, similarly to above, may pump the cigarette liquid out from the collecting chamber through the second through hole 152, and then transmit the cigarette liquid pumped out to the cigarette liquid storing chamber 2 through the fourth through hole 154. Of course, in practical implementation, a third through hole 153 is provided at a location where the atomization liquid storing chamber 10 contacts the electric pump 6, and a fourth through hole 154 is provided at a location where the cigarette liquid storing chamber 2 contacts the electric pump 6, at this time, the cigarette liquid in the collecting chamber may be pumped out and transmitted to the atomization liquid storing chamber 10 or the cigarette liquid storing chamber 2, in accordance with the design requirements.

Optionally, when a second through hole 152 is provided at a location where the collecting chamber 12 contacts the electric pump 6, a first through hole 151 is also provided at the bottom of the housing 1, and the electric pump 6 connects to the first through hole 151, at this time, the electric pump 6 may pump the cigarette liquid out from the collecting chamber 12 through the second through hole 152, and then transmit the cigarette liquid pumped out to external of the E-cigarette.

The cigarette liquid storing chamber 2 is provided with a fourth through hole 154 at a location where the cigarette liquid storing chamber 2 contacts the electric pump 6. The atomization liquid storing chamber 10 is provided with a third through hole 153 at a location where the atomization liquid storing chamber 10 contacts the electric pump 6.

In this embodiment, the cigarette liquid storing chamber 2 is disposed above the collecting chamber 12. The atomization liquid storing chamber 10 may be arranged either inside the cigarette liquid storing chamber 2 or side-by-side with the cigarette liquid storing chamber 2. Optionally, the cigarette liquid storing chamber 2 functions as a primary storage for the cigarette liquid and has a chamber with a volume larger than that of the atomization liquid storing chamber 10. The collecting chamber 12 is configured to collect condensate liquid flowing down a wall of the atomizing passage 18 and liquid leaking from the aspiration element 17 or leaking from any of the chambers and the passage walls. Optionally, the cigarette liquid storing chamber 2 may be freely detachable, and when it is detached, it may be sealed off with a sealing cap to store the cigarette liquid for a long time. Optionally, the collecting chamber 12 may also be freely detachable.

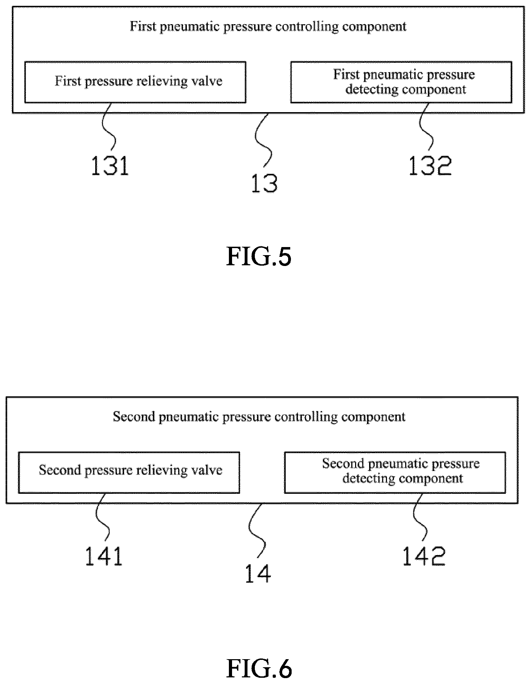

The collecting chamber 12 includes a second liquid level detecting component 5. The cigarette liquid storing chamber 2 includes a third liquid level detecting component 8 and a second pneumatic pressure controlling component 14. The atomization liquid storing chamber 10 includes a first liquid level detecting component 9 and a first pneumatic pressure controlling component 13. Meanwhile, as shown in FIGS. 5 and 6, the first pneumatic pressure controlling component 13 includes a first pressure relieving valve 131 and a first pneumatic pressure detecting component 132. The second pneumatic pressure controlling component 14 includes a second pressure relieving valve 141 and a second pneumatic pressure detecting component 142.

The power supply 4 is electrically coupled with the electronic components in the E-cigarette 100 for providing power thereto. The electronic components include but are not limited to the electric pump 6, the controlling board 3, the first pressure relieving valve 131, the second pressure relieving valve 141, the first liquid level detecting component 9, the second liquid level detecting component 5, the third liquid level detecting component 8, the atomizing head 11, the display, the second pneumatic pressure detecting component 142 and the first pneumatic pressure detecting component 132, etc..

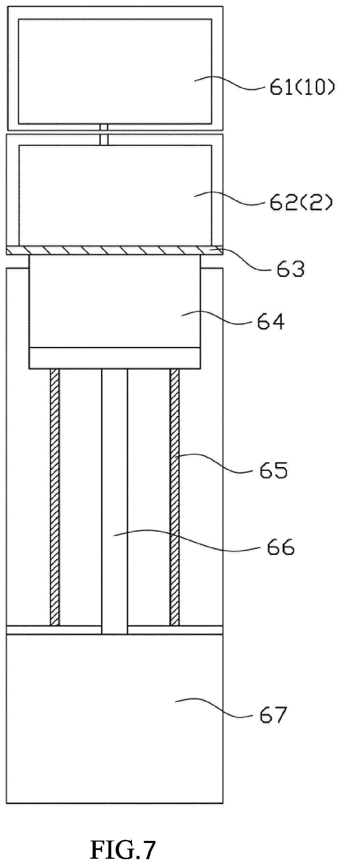

The electric pump 6 of the disclosure is electrically coupled with the controlling board 3. When the power supply 4 supplies power, the electric pump 6 is activated, and the controlling board 3 controls the electric pump 6. Referring to FIG. 7, which is an exemplary structure for the electric pump 6, the electric pump 6 includes a motor 67 and a worm 66 coupled to the motor 67. A push rod 64 is mounted on an end of the worm 66. The electric pump 6 further includes a guiding rail 65 and a piston 63. The push rod 64 is slidable along the guiding rail 65. The piston 63 is mounted on an end of the push rod 64, and may be driven by the push rod 64. The electric pump 6 shown in FIG. 7 includes a first storing chamber 61 and a second storing chamber 62. During operation, the motor 67 rotates, and the worm 66 rotates along with the motor 67, driving the push rod 64 to move along the guiding rail 65, and the push rod 64 drives the piston 63 to move forward. When the motor 67 rotates in a positive direction, the piston 63 moves forward, and further pushes the second storing chamber 62 to compress the gas or liquid therein, increasing the internal pressure in the chamber 62, so that the gas or liquid therein is pumped into the first storing chamber 61. When the motor 67 rotates in a reverse direction, the piston 63 returns, decreasing the pressure in the second storing chamber 62, so that the gas or liquid in the first storing chamber 61 is drawn into the second storing chamber 62. As shown in the present disclosure, the electric pump 6 is in communication with the cigarette liquid storing chamber 2 and the atomization liquid storing chamber 10. The cigarette liquid storing chamber 2 is equivalent to the second storing chamber 62. The atomization liquid storing chamber 10 is equivalent to the first storing chamber 61. When the motor 67 rotates in the positive direction, the cigarette liquid in the liquid storing chamber 2 is pumped into the atomization liquid storing chamber 10, and when the motor 67 rotates in the reverse direction, the piston 63 returns, and the cigarette liquid in the liquid storing chamber 10 is drawn into the cigarette liquid storing chamber 2.

It should be noted that, FIG. 7 only shows the case where the electric pump 6 is coupled to two storing chambers, the same principle applies to situations where the electric pump 6 drives three or more storing chambers. As shown in FIG. 8, which illustrates three storing chambers as an example, a two-position three-way solenoid valve 68 may be provided, through which the electric pump 6 may be configured to communicate with three storing chambers, respectively: for example, when the third through hole 153 is provided at a location where the atomization liquid storing chamber 10 contacts the electric pump 6, and the fourth through hole 154 is provided at a location where the cigarette liquid storing chamber 2 contacts the electric pump 6, communicate with the collecting chamber 12 via the second through hole 152, communicate with the cigarette liquid storing chamber 2 via the fourth through hole 154, and communicate with the atomization liquid storing chamber 10 via the third through hole 153. The controlling board 3 may control the pumping action of the pump 6, such as pumping the cigarette liquid in the atomization liquid storing chamber 10 into the cigarette liquid storing chamber 2, or pumping the cigarette liquid in the cigarette liquid storing chamber 2 into the atomization liquid storing chamber 10, or pumping the cigarette liquid in the collecting chamber 12 into the cigarette liquid storing chamber 2 and the like. As shown in FIG. 9, which illustrates four storing chambers as an example, a two-position four-way solenoid valve 69 may be provided, through which the electric pump 6 may be configured to communicate with four storing chambers, respectively, for example: communicate with the collecting chamber 12 via the second through holes 152, communicate with the cigarette liquid storing chamber 2 via the fourth through hole 154, communicate with the atomization liquid storing chamber 10 via the third through hole 153, and communicate with any liquid storing apparatus external to the housing 1 via the first through hole 151. Such a liquid storing apparatus external to the housing 1 may be, for example, a cigarette liquid bottle 20. The controlling board 3 can control the pumping action for the electric pump 6, such as to pumping the cigarette liquid in the atomization liquid storing chamber 10 into the cigarette liquid storing chamber 2, or pumping the cigarette liquid in the cigarette liquid storing chamber 2 into the atomization liquid storing chamber 10, or pumping the cigarette liquid in the collecting chamber 12 into the cigarette liquid storing chamber 2, and pumping the cigarette liquid in the collecting chamber 12 out of the E-cigarette 100 for the cigarette liquid bottle 20 to collect, and the like.

The electric pump 6 is configured to pump the cigarette liquid in the atomization liquid storing chamber 10 into the cigarette liquid storing chamber 2, and to pump the cigarette liquid in the cigarette liquid storing chamber 2 into the atomization liquid storing chamber 10. The electric pump 6 may also pump the cigarette liquid in the collecting chamber 12 into the cigarette liquid storing chamber 2 or out of the E-cigarette 100. Specifically, the controlling board 3 is electrically coupled with the electric pump 6, and is configured to, with power from the power supply 4, control the electric pump 6 to pump the cigarette liquid in the atomization liquid storing chamber 10 into the cigarette liquid storing chamber 2 when the cigarette liquid in the atomization liquid storing chamber 10 needs to be cleared out, or control the electric pump 6 to pump the liquid pump in the cigarette liquid storing chamber 2 into the atomization liquid storing chamber 10 when the cigarette liquid need to be refilled, or control the electric pump 6 to pump the cigarette liquid in the collecting chamber 12 into the cigarette liquid storing chamber 2 or out of the E-cigarette when the cigarette liquid in the collecting chamber reaches a given level. The atomizing head 11, electrically coupled with the controlling board 3, is configured to atomize the cigarette liquid entering therein through the liquid inlet 16 from the atomization liquid storing chamber 10 into smoke for a user to smoke. The user may use the cigarette mouthpiece 7 to inhale the smoke from the E-cigarette 100.

Referring to FIGS. 5 and 6, for the purpose of detecting and adjusting the pneumatic pressure in the atomization liquid storing chamber 10, the atomization liquid storing chamber 10 is internally provided with a first pressure detecting component 132 and a first pressure relieving valve 131. Optionally, the first pneumatic pressure detecting component 132 and first pressure relieving valve 131 may be arranged on the sidewall of the atomization liquid storing chamber 10 and electrically coupled with the controlling board 3. The first pneumatic pressure detecting component 132 is configured to detect the pneumatic pressure in the atomization liquid storing chamber 10 and when it is detected that the pneumatic pressure in the atomization liquid storing chamber 10 reaches a first preset pressure value, the first pressure relieving valve 131 will be activated to relieve pressure for the atomization liquid storing chamber 10.

In order to detect and adjust the pneumatic pressure in the cigarette liquid storing chamber 2, a second pneumatic pressure detecting component 142 and a second pressure relieving valve 141 are disposed inside the cigarette liquid storing chamber 2, optionally disposed on the sidewall of the cigarette liquid storing chamber 2, and electrically coupled with the controlling board 3. The second pneumatic pressure detecting component 142 is configured to detect the pneumatic pressure in the cigarette liquid storing chamber 2 and when it is detected that the pneumatic pressure in the atomization liquid storing chamber 2 reaches a second preset pressure value, the second pressure relieving valve 141 will be activated to relieve pressure for the cigarette liquid storing chamber 2. The second preset pressure value is pre-configured according to a performance of the cigarette liquid storing chamber 2.

The first liquid level detecting component 9 is disposed in the atomization liquid storing chamber 10, electrically coupled with the controlling board 3, and is configured to detect the liquid level in the atomization liquid storing chamber 10. In this embodiment, the first liquid level detecting component 9 may be disposed on the bottom, or on a upper portion of a sidewall of the atomization liquid storing chamber 10. The first liquid level detecting component 9 disposed on the bottom of the atomization liquid storing chamber 10 is configured to detect a minimum liquid level thereof for determining whether any liquid is in the atomization liquid storing chamber 10. The first liquid level detecting component 9 disposed on the upper portion of the sidewall of the atomization liquid storing chamber 10 is configured to detect the maximum liquid level of the atomization liquid storing chamber 10 for determining whether to terminate refilling the atomization liquid storing chamber 10.

In other embodiments, the first liquid level detecting component 9 may also be disposed on a lower portion of the sidewall of the atomization liquid storing chamber 10. The specific location on the lower portion of the sidewall for the first liquid level detecting component 9 is determined according to a preset liquid cleaning level for the atomization liquid storing chamber 10. The preset liquid cleaning level is configured to define a liquid level that, when the liquid level is reached, the atomization liquid storing chamber 10 needs to be cleaned. For example, the preset liquid cleaning level is configured as 10% of a capacity of the atomization liquid storing chamber 10, and the atomization liquid storing chamber 10 will need to be cleaned when the liquid level therein reaches 10% of its capacity. The first liquid level detecting component 9 arranged on the lower portion of the sidewall of the atomization liquid storing chamber 10, may detect whether the position of the preset liquid level has been reached.

In yet other embodiments, there may be more than one of the first liquid level detecting components 9, which are respectively disposed on the bottom, the lower portion of the sidewall or the upper portion of the sidewall, of the atomization liquid storing chamber 10, or any other location where liquid level detecting is desired, in order to detect the particular liquid level in the atomization liquid storing chamber 10 in real time. A value measured by the first liquid level detecting component 9 at any specific location may be selected as a first preset liquid level of the atomization liquid storing chamber 10.

Thus, the first liquid level detecting component 9 may be separately arranged on the bottom, the upper portion of the sidewall or the lower portion of the sidewall of the atomization liquid storing chamber 10, or the first liquid level detecting components 9 may be simultaneously arranged on the bottom and the upper portion of the sidewall of the atomization liquid storing chamber 10, or simultaneously arranged on the bottom and the lower portion of the sidewall of the atomization liquid storing chamber 10, or simultaneously arranged on the bottom, the upper portion and the lower portion of the sidewall of the atomization liquid storing chamber 10, the first liquid level detection component being configured to: detect a minimum liquid level of the atomization liquid storing chamber 10 when arranged on the bottom thereof; detect a maximum liquid level of the atomization liquid storing chamber 10 when arranged on the upper portion of the sidewall thereof; and detect a first preset liquid level value for the atomization liquid storing chamber 10 when arranged on the lower portion of the sidewall thereof.

The controlling board 3 is configured to, after the E-cigarette 100 is activated, pump the cigarette liquid in the cigarette liquid storing chamber 2 into the atomization liquid storing chamber 10 via the fourth through hole 154 and the third through hole 153 as required by actual situation. In this embodiment, the controlling board 3 may also, following the activation of the E-cigarette 100, control the first liquid level detecting component 9 to detect the liquid level in the atomization liquid storing chamber 10 to determine whether there is any liquid in the atomization liquid storing chamber 10. In one embodiment, there are three first liquid level detecting components 9, which are, respectively, located on the bottom, the upper portion of the sidewall of or the lower portion of the sidewall of the atomization liquid storing chamber 10. When the first liquid level detecting component 9 arranged on the bottom of the atomization liquid storing chamber 10 has detected that the liquid level in the chamber reaches its minimum liquid level, the controlling board 3 controls the electric pump 6 to pump the cigarette liquid from the cigarette liquid storing chamber 2 into the atomization liquid storing chamber 10 via the fourth through hole 154 and third through hole 153, so that the atomization liquid storing chamber 10 get cigarette liquid. When the first liquid level detecting component 9 arranged on the upper portion of the sidewall of the atomization liquid storing chamber 10 has detected that the liquid level in the atomization liquid storing chamber 10 reaches its maximum liquid level, the controlling board 3 controls the electric pump 6 to terminate pumping cigarette liquid from the cigarette liquid storing chamber 2 into the atomization liquid storing chamber 10. Any one of the liquid levels detected by the first liquid level detecting component 9 located on the lower portion of the sidewall of or any other location in the atomization liquid storing chamber 10 may be set as the first preset liquid level. The controlling board 3 is further configured to control the first liquid level detecting component 9 to detect the liquid level in the atomization liquid storing chamber 10 and determine whether the detected liquid level reaches the first preset liquid level. In this embodiment, the first liquid level detecting component 9 detects whether the liquid level in the atomization liquid storing chamber 10 reaches the first preset liquid level. When the detected liquid level reaches the first preset liquid level value, the controlling board 3 controls the electric pump 6 to terminate pumping of the cigarette liquid from the cigarette liquid storing chamber 2 into the atomization liquid storing chamber 10, i.e., to terminate refilling operation. When the detected liquid level is yet to reach the first preset liquid level value, the controlling board 3 will control the electric pump 6 to continue pumping of the cigarette liquid from the cigarette liquid storing chamber 2 into the atomization liquid storing chamber 10. The first preset liquid level may be pre-configured by a user to be at, e.g., the maximum liquid level, or 70% to 90% of the maximum liquid level of the liquid storing chamber in the atomization liquid storing chamber 10. The first preset liquid level may also be configured according to an output power of the E-cigarette 100.

During refilling the cigarette liquid in the cigarette liquid storing chamber 2 into the atomization liquid storing chamber 10, the controlling board 3 is further configured to control the first pneumatic pressure detecting component 132 to detect the pneumatic pressure in the atomization liquid storing chamber 10 and determine whether the detected pneumatic pressure reaches the first preset pressure value. When the detected pneumatic pressure reaches the first preset pressure value, the controlling board 3 controls the first pressure relieving valve 131 to be activated to relieve the pressure. When the detected pneumatic pressure is yet to reach the first preset pressure value, the controlling board 3 continues detecting the pneumatic pressure in the atomization liquid storing chamber 10 and determining whether the liquid level in the atomization liquid storing chamber 10 reaches the first preset liquid level value. The first preset pressure value is pre-configured according to the performance of the atomization liquid storing chamber 10.

When there is liquid in the atomization liquid storing chamber 10, the controlling board 3 sends prompting information to the display to prompt the user to clean the atomization liquid storing chamber 10. The E-cigarette 100 may also include a vibrating unit (not shown) to prompt the user to clean the atomization liquid storing chamber 10. The display may also show a confirmation window for the user to confirm whether to ignore the prompting information. When the user ignores the prompting information, then instead of cleaning the cigarette liquid from the atomization liquid storing chamber, the controlling board 3 controls the liquid pump 6 to pump the cigarette liquid in the cigarette liquid storing chamber 2 into the atomization liquid storing chamber 10, and When the user does not ignore the prompting information, the controlling board 3 turns off the E-cigarette 100.

The third liquid level detecting component 8 is disposed inside the cigarette liquid storing chamber 2, electrically coupled with the controlling board 3, and is configured to detect the liquid level in the cigarette liquid storing chamber 2. The third liquid level detecting component 8 may include a liquid level detecting component disposed on the bottom and/or a liquid level detecting component disposed on the upper end of the cigarette liquid storing chamber 2. The liquid level detecting component disposed on the bottom of the cigarette liquid storing chamber 2 is configured to detect the minimum liquid level thereof for determining whether there is any liquid in the cigarette liquid storing chamber 2, i.e., whether liquid refilling is necessary. The liquid level detecting component arranged on the upper end of the cigarette liquid storing chamber 2 is configured to detect the maximum liquid level of the cigarette liquid storing chamber 2, so as to determine whether to terminate liquid refilling into the cigarette liquid storing chamber 2, i.e., the refilling is completed. During the refilling, a conduit 201 on the cigarette liquid bottle 20 is aligned to, and is in fluid communication with the first through hole 151, and the cigarette liquid 202 in the cigarette liquid bottle 20 is injected into the cigarette liquid storing chamber 2 by the electric pump 6.

The controlling board 3 is configured to control the third liquid level detecting component 8 to detect the liquid level in the cigarette liquid storing chamber 2 after the E-cigarette 100 is activated, and determine whether there is any liquid in the cigarette liquid storing chamber 2, i.e., whether refilling is needed. In this embodiment, the third liquid level detecting component 8 may include a liquid level detecting component disposed on the bottom and the upper end of the cigarette liquid storing chamber 2. When the third liquid level detecting component 8 on the bottom detects that the liquid level in the liquid storing chamber 2 reaches the minimum level, the controlling board 3 controls the electric pump 6 to pump the cigarette liquid 202 in the cigarette liquid bottle 20 into the cigarette liquid storing chamber 2 via the conduit 201 and the first through hole 151. When the third liquid level detecting unit 8 on the upper end detects that the liquid level in the cigarette liquid storing chamber 2 reaches the maximum level, the controlling board 3 controls the electric pump 6 to terminate refilling the cigarette liquid storing chamber 2, i.e., to completing the refilling. During refilling, the controlling board 3 is further configured to control the second pneumatic pressure detecting component 142 to detect the pneumatic pressure in the cigarette liquid storing chamber 2 and determine whether the detected pneumatic pressure reaches the second preset pressure value. When the detected pneumatic pressure reaches the second preset pressure value, the controlling board 3 control the second pressure relieving valve 141 to be activated to relieve pressure for the cigarette liquid storing chamber 2.

The controlling board 3 is also configured to, when the user desires to smoke, control the atomizing head 11 to transform the cigarette liquid in the atomization liquid storing chamber 10 into smoke for the user to smoke through the cigarette mouthpiece 7.

The second liquid level detecting component 5 is disposed inside the collecting chamber 12, electrically coupled with the controlling board 3, and is configured to detect the liquid level in the collecting chamber 12. When the liquid level in the collecting chamber 12 is detected by the second liquid level detecting component 5 to have reached the second preset liquid level, the electric pump 6 may be controlled to pump the cigarette liquid from the collecting chamber 12 into the cigarette liquid storing chamber 2 via the second through hole 152 and the fourth through hole 154, or to pump the cigarette liquid from the collecting chamber 12 out of the E-cigarette 100 via the second through hole 152 and the first through hole 151. When the collecting chamber 12 is detachable, the collecting chamber 12 may be manually detached, so that the cigarette liquid in the collecting chamber 12 may be dumpped.

The controlling board 3 is further configured to control the second liquid level detecting component 5 to detect the liquid level in the collecting chamber 12 and determine whether the detected liquid level reaches the second predetermined liquid level. When the detected liquid level reaches the second preset liquid level, the controlling board 3 controls the electric pump 6 to pump the cigarette liquid from the collecting chamber 12 into the cigarette liquid storing chamber via the second through hole 152 and the fourth through hole 154 and, or pump the cigarette liquid from the collecting chamber 12 out of the E-cigarette 12 via the second through hole 152 and the first through hole 151, or the controlling board 3 may send prompting information to the display to prompt the user to manually detach the collecting chamber 12 and dump the cigarette liquid contained therein. The second preset liquid level may be pre-configured by the user to be at, e.g., the maximum liquid level, or 70% to 90% of the maximum liquid level of the liquid storing chamber in the collecting chamber 12.

The controlling board 3 is also configured to, after the user terminates smoking, determine whether time elapsed since the last smoking reaches a time value set for returning liquid. When the time elapsed since the termination of atomization last smoking reaches the time value set for returning liquid, the controlling board 3 controls the electric pump 6 to pump the cigarette liquid in the atomization liquid storing chamber 10 into the cigarette liquid storing chamber 2, and controls the electric pump 6 to pump the cigarette liquid in the collecting chamber 12 into the cigarette liquid storing chamber 2 or out of the E-cigarette, or send prompting information to the display to prompt the user to manually detach the collecting chamber 12 and dump the cigarette liquid contained therein. The time value set for returning liquid is configured for determining a wait time for the E-cigarette 100 empties the cigarette liquid in the atomization liquid storing chamber 10, and may be pre-configured according to how frequent the user desires to empty. A higher frequency leads to a smaller time value set for returning liquid, and a lower frequency leads to a larger time value set for returning liquid. Assuming that the user desires to empty the cigarette liquid in the atomization liquid storing chamber 10 each time after the E-cigarette 100 is smoked, the time value set for returning liquid may be set to a smaller value, such as a value of 10 minutes, 1 hour and the like. Assuming that the user only desires to empty the cigarette liquid in the atomization liquid storing chamber 10 after longtime since the last time the E-cigarette 100 is smoked, the time value set for returning liquid may be set to a large value, such as a value of 12 hours, 24 hours and the like. Optionally, when the E-cigarette is provided with only the electric pump 6, but neither the aspiration element 17, and the time value set for returning liquid is reached, the cigarette liquid in the atomization liquid storing chamber 10 may be directly pumped into the cigarette liquid storing chamber 2; and when the E-cigarette is provided with the aspiration element 17 together with the electric pump 6, due to the aspiration element 17 may continuously draw the cigarette liquid into the atomization liquid storing chamber 10, the E-cigarette may further be provided with an occlusion component, and uses the occlusion component to block the liquid inlet, in order to avoid the problem of increasing again.

The controlling board 3 is also configured to control the E-cigarette 100 to be deactivated after the cigarette liquid in the atomization liquid storing chamber 10 is evacuated.

It should be noted that the controlling board 3 controls the pumping actions for the electric pump 6, such as to pump the cigarette liquid in the atomization liquid storing chamber 10 into the cigarette liquid storing chamber 2, or to pump the cigarette liquid in the cigarette liquid storing chamber 2 into the atomization liquid storing chamber 10, to pump the cigarette liquid in the collecting chamber 12 into the cigarette liquid storing chamber 2 or out of the E-cigarette, and the like. The controlling board 3 may simultaneously control different pumping actions for the electric pump 6.

In the above embodiments, it only takes the cleaning apparatus which is the electric pump 6 as an example. Optionally, the cleaning apparatus may also be a manual pump. At this time, the E-cigarette may further be provided with a conduit communicating with the collecting chamber. After the manual pump is triggered. The liquid smoke in the collecting chamber is discharged through the conduit to the external of the E-cigarette.

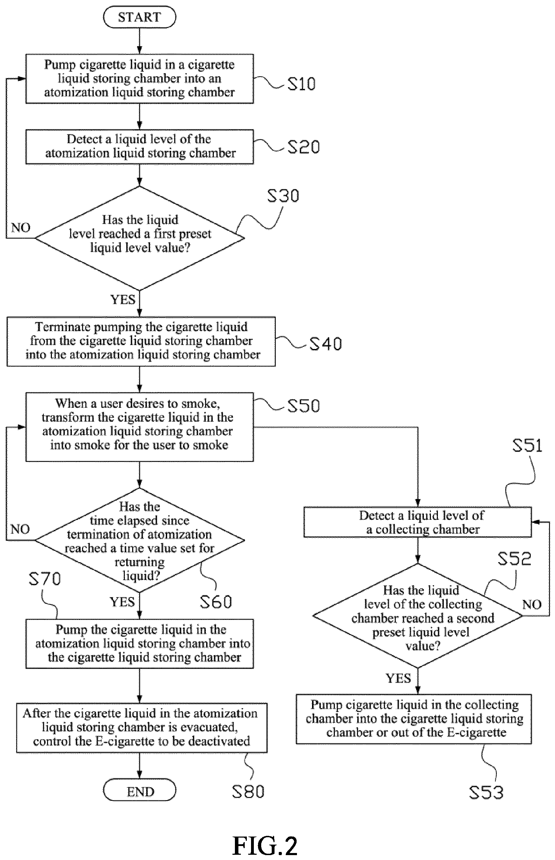

Referring to FIGS. 2, 3 and 4, which are flow charts of a method for controlling cigarette liquid in an E-cigarette according to an embodiment of the present disclosure.

At Step S10, after the E-cigarette 100 is activated, a controlling board 3 controls an electric pump 6 to pump cigarette liquid in an cigarette liquid storing chamber 2 into an atomization liquid storing chamber 10.

In this embodiment, before or during execution of the Step S10, the method may further include the following steps: the controlling board 3 controls, after the activation of the E-cigarette 100, a first liquid level detecting component 9 to detect a liquid level in the atomization liquid storing chamber 10 to determine whether there is any liquid in an atomization liquid storing chamber 10; when the atomization liquid storing chamber 10 is empty or at its minimum liquid level, the controlling board 3 controls an electric pump 6 to pump cigarette liquid from a cigarette liquid storing chamber 2into the atomization liquid storing chamber 10 via a fourth through hole 154 and a third through hole 153; otherwise, the liquid level in the atomization liquid storing chamber 10 is determined not at its minimum, upon which the controlling board 3 sends prompting information to a display to prompt a user to clean the atomization liquid storing chamber 10; in case the user ignores the prompting information, then instead of cleaning the cigarette liquid from the atomization liquid storing chamber, the controlling board 3 controls the electric pump 6 to pump cigarette liquid from the cigarette liquid storing chamber 2 into the atomization liquid storing chamber 10; in case the user does not ignore the prompting information, then the controlling board 3 deactivates the E-cigarette 100, and pumps the cigarette liquid from the atomization liquid storing chamber 10 into the cigarette liquid storing chamber 2, so that the atomization liquid storing chamber 10 may be cleaned.

In this embodiment, the method may further include the following steps before Step S10: the controlling board 3, after the E-cigarette is 100 activated, control a third liquid level detecting component 8 on a bottom to detect a liquid level in the cigarette liquid storing chamber 2 to determine whether there is any liquid is in the cigarette liquid storing chamber 2, i.e., whether refilling is needed; in case the liquid storing chamber 2 is at its minimum liquid level or contains no liquid, the controlling board 3 controls the electric pump 6 to pump the cigarette liquid 202 from the cigarette liquid bottle 20 into the cigarette liquid storing chamber 2 via the conduit 201 and the first through hole 151; simultaneously, the controlling board 3 controls the third liquid level detecting unit 8 on an upper end to detect whether the liquid level in the cigarette liquid storing chamber 2 is at a maximum level to determine whether to terminate refilling the cigarette liquid storing chamber 2, i.e., completing the refilling.

In this embodiment, before or during execution of the Step S10, the method may further include the following steps: the controlling board 3 controls a second pneumatic pressure detecting component 142 to detect a pneumatic pressure in the cigarette liquid storing chamber 2, and determines whether the detected pneumatic pressure reaches a second preset pressure value. When the detected pneumatic pressure reaches the second preset pressure value, the controlling board 3 controls the second pressure relieving valve 141 to relieve pressure for the cigarette liquid storing chamber 2.

In this embodiment, it only takes that the cigarette liquid in the cigarette liquid storing chamber is pumped and transmitted into the atomization liquid storing chamber by an electric pump as an example. Optionally, instead of using an electric pump, the cigarette liquid may be directly drawn from the cigarette liquid storing chamber into the atomization liquid storing chamber through the aspiration element. At this time, this step may not be included.

At Step S20, the controlling board 3 controls a first liquid level detecting component 9 to detect a liquid level in the atomization liquid storing chamber 10.

At Step S30, the controlling board 3 determines whether the liquid level detected by the first liquid level detecting device 9 reaches a first preset liquid level. When the detected liquid level reaches the first preset liquid level value, Step S40 is executed, and the controlling board 3 controls the electric pump 6 to terminate pumping of the cigarette liquid from the cigarette liquid storing chamber 2 into the atomization liquid storing chamber 10, i.e., to terminate refilling operation. When the detected liquid level is at the minimum liquid level value or is yet to reach the first preset liquid level value, return to Step S10, and the controlling board 3 controls the electric pump 6 to continue pumping of the cigarette liquid from the cigarette liquid storing chamber 2 into the atomization liquid storing chamber 10. The first preset liquid level may be pre-configured by a user to be at, e.g., the maximum liquid level, or 70% to 90% of the maximum liquid level of the liquid storing chamber in the atomization liquid storing chamber 10. The first preset liquid level may also be configured according to an output power of the E-cigarette 100.

In this embodiment, before or during execution of the Step S30, the method may further include the following steps: the controlling board 3 controls a first pneumatic pressure detecting component 132 to detect a pneumatic pressure in the atomization liquid storing chamber 10, and determines whether the detected pneumatic pressure reaches a first preset pressure value. When the detected pneumatic pressure reaches the first preset pressure value, the controlling board 3 control the first pressure relieving valve 131 to be activated to relieve pressure for the atomization liquid storing chamber 10. When the detected pneumatic pressure is yet to reach the first preset pressure value, the controlling board 3 continues controlling the first pneumatic pressure detecting component 132 to detect the pneumatic pressure in the atomization liquid storing chamber 10 and controlling the first liquid level detecting component 9 to detect whether the liquid level in the atomization liquid storing chamber 10 reaches the first preset liquid level value. The first preset pressure value is pre-configured according to performance of the atomization liquid storing chamber 10.

At Step S50, when the user desires to smoke, i.e., the E-cigarette is activated, the controlling board 3 controls an atomizing head 11 to transform the cigarette liquid in the atomization liquid storing chamber 10 into smoke for the user to smoke through a cigarette mouthpiece 7.

As shown in FIG. 2, during execution of Step S50, that is, during the process of smoking by the smoker, or during the smoking process of transforming the cigarette liquid in the atomization liquid storing chamber 10 into smoke, the method further include the following steps:

Step S51: the controlling board 3 controls a second liquid level detecting component 5 to detect a liquid level of a collecting chamber 12;

Step S52: the controlling board 3 determines whether the detected liquid level reaches a second preset liquid level value; and when the detected liquid level reaches the second preset liquid level, Step S53 is started, and the controlling board 3 controls the electric pump 6 to pump cigarette liquid from the collecting chamber 12 into the cigarette liquid storing chamber 2 via the second through hole 152 and the fourth through hole 154, or to pump cigarette liquid from the collecting chamber 12 out of the E-cigarette 100 via the second through hole 152 and the first through hole 151, or the controlling board 3 sends prompting information to a display to prompt the user to manually detach the collecting chamber 12 and to dump the cigarette liquid contained therein. The second preset liquid level may be pre-configured by the user to be at, e.g., the maximum liquid level, or 70% to 90% of the maximum liquid level of the liquid storing chamber in the collecting chamber 12. Otherwise, if the detected liquid level has yet to reach the second preset liquid level, the process returns to Step S51.

Step S60: after termination of atomization at the E-cigarette, the controlling board 3 determines whether time elapsed since the termination of atomization reaches a time value set for returning liquid. When the time elapsed since the termination of atomization reaches the time value set for returning liquid, Step S70 is carried out, and the controlling board 3 controls the electric pump 6 to pump the cigarette liquid from the atomization liquid storing chamber 10 into the cigarette liquid storing chamber 2, and controls the electric pump 6 to pump the cigarette liquid from the collecting chamber 12 into the cigarette liquid storing chamber 2 or to pump the cigarette liquid from the collecting chamber 12 out of the E-cigarette, or sends prompting information to a display to prompt the user to manually detach the collecting chamber 12 and to dump the cigarette liquid contained therein. When the time elapsed since the termination of atomization is yet to reach the time value set for returning liquid, the process returns to the Step S50, and the controlling board 3, when the user desires to smoke, controls an atomizing head 11 to transform the cigarette liquid in the atomization liquid storing chamber 10 into smoke for the user to smoke through the cigarette mouthpiece 7. The time value set for returning liquid is configured to determine a wait time before the E-cigarette 100 empties the cigarette liquid in the atomization liquid storing chamber 10, and may be pre-configured according to how frequent the user desires to empty. A higher frequency leads to a smaller time value set for returning liquid, and a lower frequency leads to a larger time value set for returning liquid. Assuming that the user desires to empty the cigarette liquid in the atomization liquid storing chamber 10 each time after the E-cigarette 100 is smoked, the time value set for returning liquid may be set to a smaller value, such as a value of 10 minutes, 1 hour and the like. Assuming that the user only desires to empty the cigarette liquid in the atomization liquid storing chamber 10 after a long time since the last time the E-cigarette 100 is smoked, the time value set for returning liquid may be set to a larger value, such as a value of 12 hours, 24 hours and the like.

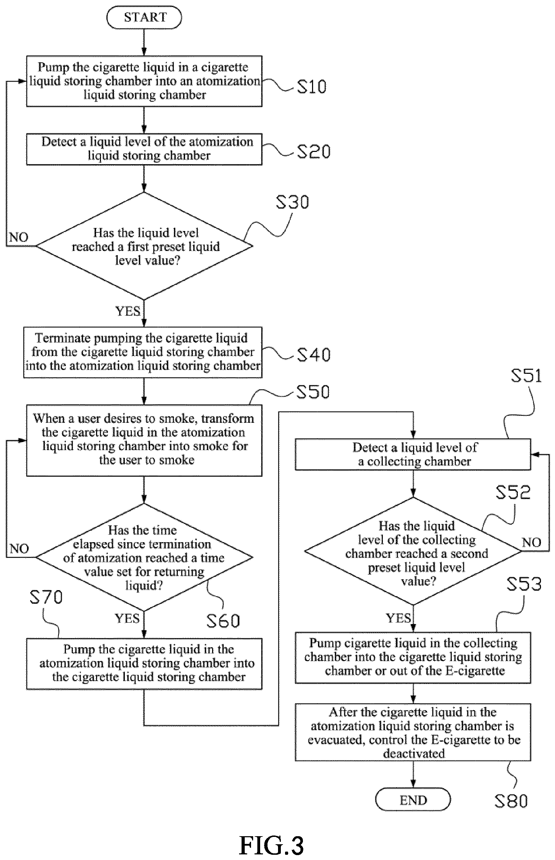

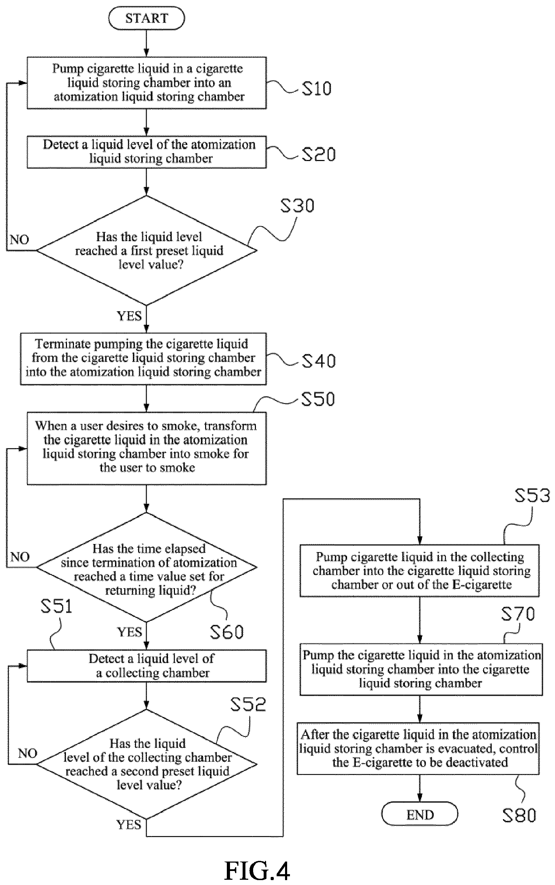

Before Step S70, as shown in FIG. 3, or after Step S70, as shown in FIG. 4, the method may further include the following steps:

Step S51: the controlling board 3 controls a second liquid level detecting component 5 to detect a liquid level of a collecting chamber 12;

Step S52: the controlling board 3 determines whether the detected liquid level reaches a second preset liquid level value; and when the detected liquid level reaches the second preset liquid level, Step S53 is started, and the controlling board 3 controls the electric pump 6 to pump cigarette liquid from the collecting chamber 12 into the cigarette liquid storing chamber 2 via the second through hole 152 and the fourth through hole 154, or to pump cigarette liquid from the collecting chamber 12 out of the E-cigarette 100 via the second through hole 152 and the first through hole 151, or the controlling board 3 sends prompting information to a display to prompt the user to manually detach the collecting chamber 12 and to dump the cigarette liquid contained therein. The second preset liquid level may be pre-configured by the user to be at, e.g., the maximum liquid level, or 70% to 90% of the maximum liquid level of the liquid storing chamber in the collecting chamber 12. Otherwise, if the detected liquid level has yet to reach the second preset liquid level, the process returns to Step S51.

At Step S80, the controlling board 3 controls the E-cigarette 100 to be deactivated after the cigarette liquid in the atomization liquid storing chamber 10 is evacuated.

It should be added that, the foregoing is only used to illustrate that when the liquid level reaches a preset threshold, the cigarette liquid in the collecting chamber is cleaned. In practical implementation, the cigarette liquid in the collecting chamber may also be cleaned, when other cleaning conditions are met. For example, step S20 and step S30 may be replaced with:
(1) Obtain a time difference from the last cleaning of the collecting chamber.
   Each time the E-cigarette cleans the liquid in the collecting chamber, it can record the time, and obtain the time difference from the last time to clean the cigarette liquid in the collecting chamber at startup. Optionally, at startup, the time difference may be obtained at a predetermined time interval, or may be obtained in real time. Of course, if a battery supplying power to a timer alone is provided in the E-cigarette, the E-cigarette may obtain the time difference every predetermined time interval or in real time, regardless of whether the E-cigarette is started or not, which is not limited herein.
(2) Detect whether the time difference from the last cleaning reaches a preset time difference.

After obtaining the time difference, it detects whether the obtained time difference reaches a preset time difference, and if the preset time difference is a time difference preconfigured according to the leakage speed and the volume of the collecting chamber, it indicates that it has accumulate much cigarette liquid in the collecting chamber when the obtained time difference reaches the preset time difference, and in order to avoid overflow of the cigarette liquid in the collecting chamber, the cigarette liquid in the collecting chamber may be cleaned. Optionally, when the time difference is a time difference preconfigured according to the shelf life of the cigarette liquid, it indicates that the cigarette liquid in the collecting chamber has expired, when the obtained cigarette liquid reaches the preset time difference, at this time, the cigarette liquid in the collecting chamber can be cleaned, and the cleaning at this time may be to discharge the cigarette liquid in the collecting chamber to the external, or to prompt the replacement of the collecting chamber.

It should be noted that, the foregoing only illustrates the solution in the collecting chamber to be cleaned when the obtained time difference reaches a preset time difference. In practical implementation, the E-cigarette may also clean the collecting chamber at a preset moment after that the preset time difference is reached. For example, when it detects that the time difference obtained reaches the preset time difference at the startup of the E-cigarette, the cleaning may be done at the end of this suction, or at the next startup of the E-cigarette, or at the end of next suction after the next startup, which is not limited herein.

In addition, the above embodiments is only exemplified by pumping the cigarette liquid to the atomization liquid storing chamber or pumping the cigarette liquid to external of the E-cigarette. In practical implementation, the cleaning may be reminded by way of sending prompting information, which is used to remind of the replacement of the collecting chamber.

It should be understood that, although the specification is described according to the embodiments, an individual embodiment does not include only one independent technical solution. The description of the specification is merely for the sake of clarity, and those skilled in the art should take the specification as a whole, and individual technical solutions in the embodiments may also be appropriately combined to create other embodiments conceivable to those of ordinary skill in the art.

The series of detailed descriptions set forth hereinabove are merely specific descriptions of possible implementations for the present disclosure, rather than intends to limit the protection scope of the present disclosure. Any equivalent or alternative implementation made without departing from the technical spirit of the present disclosure should be included in the protection scope of the present disclosure.

## Claims

1. An E-cigarette, comprising a housing, an atomization liquid storing chamber inside the housing and a controlling board, the atomization liquid storing chamber is configured to store cigarette liquid, wherein:
the E-cigarette further comprises a collecting chamber configured to collect leaked cigarette liquid in the E-cigarette, and a cleaning apparatus, wherein the cleaning apparatus is configured to clean the cigarette liquid in the collecting chamber.

2. The E-cigarette according to claim 1, wherein the cleaning apparatus comprises an electric pump, the electric pump is electrically coupled with the controlling board, and the electric pump is controlled by the controlling board to clean the cigarette liquid in the collecting chamber.

3. The E-cigarette according to claim 2, wherein the collecting chamber is provided with a second through hole, the atomization liquid storing chamber is provided with a third through hole, and the electric pump is configured to be in communication with the collecting chamber through the second through hole, and to be in communication with the atomization liquid storing chamber through the third through hole.

4. The E-cigarette according to claim 2, wherein a bottom of the housing is provided with a first through hole, the collecting chamber is provided with a second through hole, and the electric pump is configured to be in communication with the collecting chamber through the second through hole, and to be in communication with the external of the E-cigarette through the first through hole.

5. The E-cigarette according to claim 1, wherein the collecting chamber is internally provided with a second liquid level detecting component which is electrically coupled with the controlling board and configured to detect a liquid level in the collecting chamber.

6. The E-cigarette according to claim 1, wherein the atomization liquid storing chamber is internally provided with a first liquid level detecting component which is electrically coupled with the controlling board, the first liquid level detecting component is arranged on any one of or any combination of: a bottom of the atomization liquid storing chamber, a upper portion of the sidewall of the atomization liquid storing chamber and a lower portion of the sidewall of the atomization liquid storing chamber, the first liquid level detection component being configured to: detect a minimum liquid level of the atomization liquid storing chamber if arranged on the bottom thereof, detect a maximum liquid level of the atomization liquid storing chamber if arranged on the upper portion of the sidewall thereof, and detect a first preset liquid level value for the atomization liquid storing chamber if arranged on the lower portion of the sidewall thereof, wherein the first preset liquid level value is 70% - 90% of the maximum liquid level of a liquid storing chamber in the atomization liquid storing chamber.

7. The E-cigarette according to claim 1, wherein the atomization liquid storing chamber is internally provided with a first pneumatic pressure controlling component which is electrically coupled to the controlling board, the first pneumatic pressure controlling component comprises a first pressure relieving valve and a first pneumatic pressure detecting component configured to detect a pneumatic pressure in the atomization liquid storing chamber, and the first pressure relieving valve is configured to relieve pressure for the atomization liquid storing chamber when the pneumatic pressure in the atomization liquid storing chamber reaches a first preset pressure value.

8. The E-cigarette according to claim 1, further comprising a cigarette liquid storing chamber, and wherein the cigarette liquid storing chamber is internally provided with a third liquid level detecting component which is electrically coupled with the controlling board, the third liquid level detecting component comprises a liquid level detecting component configured to detect a minimum liquid level of the cigarette liquid storing chamber; and/or configured to detect a maximum liquid level of the cigarette liquid storing chamber; and
the cigarette liquid storing chamber is further provided internally with a second pneumatic pressure controlling component which is electrically coupled with the controlling board and the second pneumatic pressure controlling component comprises a second pneumatic pressure detecting component configured to detect a pneumatic pressure for the cigarette liquid storing chamber and a second pressure relieving valve configured to relieve pressure for the cigarette liquid storing chamber when the pneumatic pressure in the cigarette liquid storing chamber reaches a second preset pressure value.

9. The E-cigarette according to claim 1, further comprising a cigarette liquid storing chamber, and wherein the collecting chamber is located on a bottom of the housing, the atomization liquid storing chamber and the cigarette liquid storing chamber are located above the collecting chamber, the atomization liquid storing chamber is located inside the cigarette liquid storing chamber, or the atomization liquid storing chamber is located in parallel with the cigarette liquid storing chamber; and the collecting chamber or the cigarette liquid storing chamber is detachably disposed with respect to the E-cigarette.

10. The E-cigarette according to claim 1, further comprising a cigarette mouthpiece, and a smoke passage is arranged in the atomization liquid storing chamber, wherein the cigarette mouthpiece is mounted on the smoke passage and extends out of the housing from the smoke passage; for fluid communication with the atomization liquid storing chamber, the smoke passage is provided an atomizing head with a liquid inlet through which the cigarette liquid in the atomization liquid storing chamber flows into the atomizing head via the liquid inlet.

11. A method for controlling cigarette liquid in an E-cigarette, comprises the following steps:
detecting whether a cleaning condition for cleaning cigarette liquid in a collecting chamber is satisfied, wherein the collecting chamber is configured to collect leaked cigarette liquid in the E-cigarette; and
when the cleaning condition is satisfied, cleaning the cigarette liquid in the collecting chamber.

12. The method for controlling cigarette liquid in an E-cigarette according to claim 11, wherein the detecting whether a cleaning condition for cleaning cigarette liquid in the collecting chamber is satisfied, comprises:
obtaining a liquid level in the collecting chamber; and
detecting whether the liquid level reaches a preset threshold.

13. The method for controlling cigarette liquid in an E-cigarette according to claim 11, wherein the detecting whether a cleaning condition for cleaning cigarette liquid in a collecting chamber is satisfied, comprises:
obtaining a time difference from the last cleaning of the collecting chamber; and
detecting whether the time difference from the last cleaning of the collecting chamber reaches a preset time difference.

14. The method for controlling cigarette liquid in an E-cigarette according to claim 13, wherein the when the cleaning condition is satisfied, cleaning the cigarette liquid in the collecting chamber, comprises:
when the time difference from the last cleaning of the collecting chamber reaches a preset time difference, cleaning the cigarette liquid in the collecting chamber at a preset moment thereafter, wherein the preset moment is a moment of an end of an suction or a moment of a next startup.

15. The method for controlling cigarette liquid in an E-cigarette according to claim 11, wherein the cleaning the cigarette liquid in the collecting chamber, comprises:
pumping the cigarette liquid in the collecting chamber into an atomization liquid storing chamber;
or,
pumping the cigarette liquid in the collecting chamber out of the E-cigarette;
or,
sending prompting information, wherein the prompting information is configured to prompt a change of the collecting chamber.

16. The method for controlling cigarette liquid in an E-cigarette according to claim 11, further comprising:
pumping cigarette liquid in the cigarette liquid storing chamber into the atomization liquid storing chamber;
detecting a liquid level in the atomization liquid storing chamber;
determining whether the detected liquid level reaches a first preset liquid level value;
and when the detected liquid level reaches the first preset liquid level value, terminating the pumping of the cigarette liquid in the cigarette liquid storing chamber into the atomization liquid storing chamber.

17. The method for controlling cigarette liquid in an E-cigarette according to claim 11, further comprising:
detecting whether the liquid level of the atomization liquid storing chamber is lower than a minimum liquid level, and
when the detecting result indicates that the atomization liquid storing chamber is lower than a minimum liquid level, controlling an electric pump to pump the cigarette liquid in the cigarette liquid storing chamber into the atomization liquid storing chamber; otherwise when the detecting result indicates that the atomization liquid storing chamber is not lower than the minimum liquid level, sending, by an controlling board, prompting information to a display to prompt a user to clean the atomization liquid storing chamber; or
when the prompting information is ignored, then controlling, by the controlling board, the electric pump to pump the cigarette liquid in the cigarette liquid storing chamber into the atomization liquid storing chamber; otherwise when the prompting information is not ignored, deactivating, by the controlling board, the E-cigarette, and pumping the cigarette liquid in the atomization liquid storing chamber into the cigarette liquid storing chamber;
detecting a liquid level in the cigarette liquid storing chamber;
when the liquid level in the cigarette liquid storing chamber is determined to be lower than a minimum liquid level, controlling, by the controlling board, the electric pump to pump cigarette liquid into the cigarette liquid storing chamber; or
when the liquid level in the cigarette liquid storing chamber is determined to be at a maximum liquid level, controlling, by the controlling board, the electric pump to stop pumping cigarette liquid into the cigarette liquid storing chamber.

18. The method for controlling cigarette liquid in an E-cigarette according to claim 17, further comprising:
detecting pneumatic pressure in the cigarette liquid storing chamber and determining whether the detected pneumatic pressure reaches a second preset pressure value; and
relieving pressure for the cigarette liquid storing chamber when the detected pneumatic pressure reaches the second preset pressure value.

19. The method for controlling cigarette liquid in an E-cigarette according to claim 17, further comprising:
detecting pneumatic pressure in the atomization liquid storing chamber and determining whether the detected pneumatic pressure reaches a first preset pressure value; and
relieving pressure for the atomization liquid storing chamber, when the detected pneumatic pressure reaches the first preset pressure value; or
continuing the detecting of the pneumatic pressure in the atomization liquid storing chamber and the determining of whether the liquid level of the atomization liquid storing chamber reaches the first preset liquid level value, when the detected pneumatic pressure is yet to reach the first preset pressure value.
